# EUROPEAN PATENT APPLICATION

(11) **EP 3 952 214 A1**
(43) Date of publication of application: **09.02.2022**
(21) Application number: 21186516.7
(22) Date of filing: 19.07.2021
(51) Int. Cl.: H04L 12/24, H04L 29/06, H04W 12/08

(54) **MANAGEMENT SERVER, NETWORK SYSTEM, METHOD FOR CONTROLLING NETWORK CONNECTION, AND CARRIER MEANS**

(30) Priority: 07.08.2020 JP 2020134706
(71) Applicant: Ricoh Company, Ltd., Tokyo 143-8555 (JP)
(72) Inventor: TAKEMURA, Kazumasa, Tokyo, 143-8555 (JP)
(74) Representative: Watkin, Timothy Lawrence Harvey

(57) **Abstract**

A management server (15), a network system including the management server, a method for controlling connection to a network, and carrier means are provided. The management server (15) includes: communication means (94, 96) for receiving a request relating to a network to be used; and control means (93) for controlling, based on the received request, a relay device that establishes a connection to the network to relay data. In response to an elapse of a permitted use period of the network, the control means (93) instructs the relay device to disconnect the connection to the network.

## Description

### BACKGROUND

### Technical Field

The present disclosure relates to a management server, a network system, a method for controlling network connection, and carrier means.

### Description of the Related Art

When a visitor (guest) visits a facility such as a school or an office from outside, the visitor often temporarily establishes a connection to a network in the facility to use a device or a server installed in the facility. To maintain the network security in such a facility, an increasing number of facilities provide a network for guests (guest network) separately from a network used by employees or staff members of the facility.

To permit a guest to use a guest network, a facility that provides the guest network discloses information for use in establishing a connection to the guest network. However, if no use limit is set in the information, it is difficult to maintain the network security or the communication quality and the network may be kept being used in an unauthorized manner. Therefore, a guest network is desirably a temporary network which a limited number of guests are permitted to use for a limited time period.

Accordingly, there is a technique for managing a state of a guest network with an information processing apparatus and instructing an access point to generate or delete a guest network for the purpose of providing a temporary network (see, for example, Japanese Unexamined Patent Application Publication No. 2020-092342).

However, the aforementioned technique assumes an operation on a screen of the information processing apparatus. Thus, a user is not permitted to perform an operation from the user's information terminal, which disadvantageously leads to decreased convenience of the temporary network.

### SUMMARY

Example embodiments include a management server including communication means for receiving a request relating to a network to be used; and control means for controlling, based on the received request, a relay device configured to establish a connection to the network to relay data. In response to an elapse of a permitted use period of the network, the control means instructs the relay device to disconnect the connection to the network.

Example embodiments include a network system including the management server, and a relay device that establishes a connection to the network.

Example embodiments include a method for controlling connection to a network, including receiving a request relating to the network; and controlling, based on the received request, a relay device that establishes a connection to the network to relay data. The controlling includes instructing, in response to an elapse of a permitted use period of the network, the relay device to disconnect the connection to the network.

Example embodiments include carrier means carrying computer readable code for controlling a computer system to carry out the above-described method, such as a recording medium storing the computer readable code.

With the above-described configuration, user operability for using a temporary network is improved.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of a configuration of a network system;
FIG. 2 is a diagram illustrating an example of a hardware configuration of an information processing apparatus;
FIG. 3 is a diagram illustrating an example of a hardware configuration of a guest network management server;
FIG. 4 is a block diagram illustrating an example of a functional configuration of the information processing apparatus;
FIG. 5 is a block diagram illustrating an example of a functional configuration of the guest network management server;
FIG. 6 is a sequence diagram illustrating a flow of a process from when the use of a guest network is started to when the use of the guest network is ended;
FIG. 7 is a diagram illustrating an example of an information processing apparatus management table;
FIG. 8 is a diagram illustrating an example of a wireless local area network (LAN) access point management table;
FIG. 9 is a diagram illustrating a first example of a guest network management table;
FIG. 10 is a diagram illustrating an example of an authentication information management table;
FIG. 11 is a diagram illustrating a first use example of a network system;
FIGs. 12A and 12B are sequence diagrams illustrating a flow of a process performed in the first use example;
FIG. 13 is an illustration of an example of a sign-in screen displayed on an information terminal;
FIG. 14 is an illustration of an example of a scheduling screen displayed on the information terminal;
FIG. 15 is a diagram illustrating a second example of the guest network management table;
FIG. 16 is a diagram illustrating a second use example of the network system;
FIG. 17 is a sequence diagram illustrating a flow of a process performed in the second use example;
FIG. 18 is a diagram illustrating a third use example of the network system;
FIG. 19 is a sequence diagram illustrating a flow of a process performed in the third use example;
FIG. 20 is a sequence diagram illustrating a flow of a process performed when printing is additionally performed;
FIG. 21 is a diagram illustrating a fourth use example of the network system;
FIG. 22 is a sequence diagram illustrating a flow of a process performed in the fourth use example; and
FIG. 23 is an illustration of an example of a screen displayed when a use time limit is checked.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

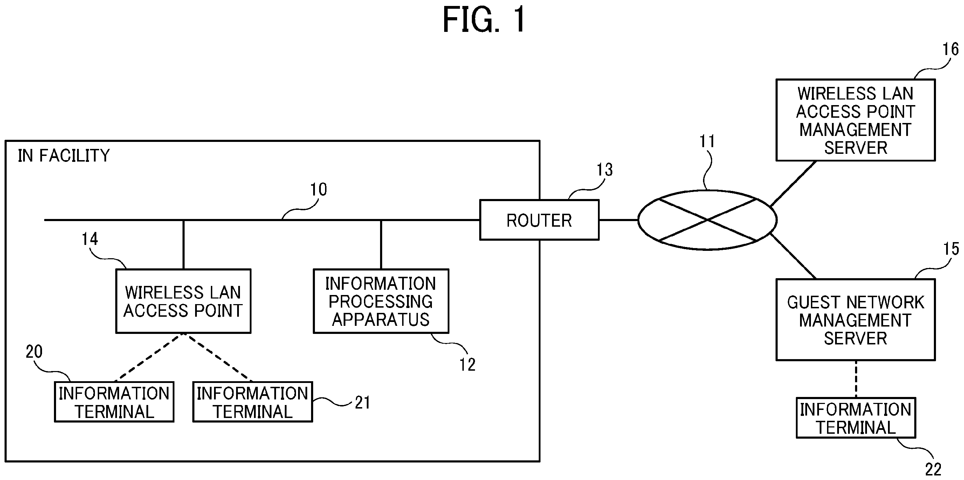

FIG. 1 is a diagram illustrating an example of a configuration of a network system. The network system at least includes a relay device and a management server. The relay device is connected to a first network 10 constructed in a facility such as a school or an office. The management server is connected to a second network 11 outside the facility. An information processing apparatus 12 that manages the relay device in the facility is connected to the first network 10. The first network 10 is, for example, a LAN. The second network 11 is, for example, the Internet. The first network 10 and the second network 11 are connected by an intermediate device that interconnects the networks and mediates communication. The intermediate device is a router 13, a gateway, or the like.

The relay device is a wireless LAN access point 14. The relay device sets connection information for use in establishing a connection to one or more networks to relay data via the one or more networks. Connections to networks by the wireless LAN access point 14 may be configured variously. Examples of such networks include a network via which specific devices in the first network 10 alone are usable, a network via which the second network 11 alone is usable, and a network via which both the first network 10 and the second network 11 are usable.

Such networks include a guest network used by guests who visit the facility from outside. For example, the aforementioned network via which specific devices in the first network 10 alone are usable or network via which the second network 11 alone is usable is set as the guest network.

The wireless LAN access point 14 wirelessly communicates with information terminals 20 and 21, which serve as information processing apparatuses used by users such as guests, to connect the information terminals 20 and 21 to a network. Herein, the term "information terminal" is used to distinguish the information terminal from the information processing apparatus 12. If the network is the network via which the second network 11 alone is usable, the information terminals 20 and 21 is able to access a server or the like in the second network 11 but are unable to access the information processing apparatus 12 or the like in the first network 10.

The information processing apparatus 12 communicates with the wireless LAN access point 14 via the first network 10 and manages a guest network to which the connection is established by the wireless LAN access point 14. Thus, an application (hereinafter, simply abbreviated as app) for managing a guest network is installed on the information processing apparatus 12. The user starts the app in the information processing apparatus 12 and inputs an instruction for starting the use of a guest network. Then, the information terminal used by the user is connected to the guest network via the wireless LAN access point 14, and the user can start the use of the guest network.

To permit the user to use the guest network, the user is to be informed of connection information for use in establishing a connection to the guest network. However, once the user is informed of the connection information, the user may keep accessing to the guest network in an unauthorized manner even after the user's visit to the facility ends. Thus, it is difficult to maintain the network security or the communication quality.

Accordingly, a permitted use period is set for the guest network, so that the guest network becomes a temporary network. Consequently, the unauthorized use of the guest network can be avoided.

The user sometimes desires to check the use time limit (or a period of validity) of the guest network while using the guest network. However, if the guest network is entirely managed by the app installed on the information processing apparatus 12, the user is unable to check the use time limit unless the user visits an installed location of the information processing apparatus 12 and operates the information processing apparatus 12. This is inconvenient for the user. If the information processing apparatus 12 fails to operate normally because of a trouble or the like, a function of monitoring the use time limit fails to work. Consequently, a usable state may be maintained even after the use time limit elapses.

When the user schedules the use of the guest network or ends the use of the guest network earlier, the user can input an instruction for scheduling or an instruction for ending the use only on a screen of the information processing apparatus 12. This is inconvenient for the user. It is convenient if the user can perform an operation from the information terminal when the user starts the use of the guest network.

Accordingly, to enable the user to input instructions for scheduling, checking the use time limit, ending the use, etc. from their information terminal, a guest network management server 15 is provided separately from the information processing apparatus 12. The guest network management server 15 serves as a management server that manages a guest network from outside. A wireless LAN access point management server 16 is provided as a control device that controls the wireless LAN access point 14. The management server may be constituted by the guest network management server 15 alone or by the guest network management server 15 and the wireless LAN access point management server 16. The management server may be the guest network management server 15 in which functions of the wireless LAN access point management server 16 are implemented.

An app for managing a guest network is installed on the guest network management server 15. An app for controlling the wireless LAN access point 14 is installed on the wireless LAN access point management server 16. To accept a request relating to a guest network from the user's information terminal, the guest network management server 15 transmits input screen information so as to provide a screen enabling an operation such as input or selection of information. An app for displaying the provided screen is installed on the user's information terminal.

The app installed on the information terminal is, for example, an app for browsing information such as a browser. An application programming interface (API), which is an app that links the app installed on the guest network management server 15 and the browser installed on the information terminal, is also installed on the guest network management server 15. The API enables instructions such as an instruction relating to a setting of a guest network to be input from outside.

To accept an instruction from the guest network management server 15, an API, which is an app that links the app of the wireless LAN access point management server 16 and the app of the guest network management server 15, is installed on the wireless LAN access point management server 16. The API enables instructions such as an instruction relating to a setting of the wireless LAN access point 14 to be input from outside.

The guest network management server 15 is installed in cloud outside the facility to be accessed from the user's information terminal via the Internet serving as the second network 11 and to provide the aforementioned screen. The cloud is a system that enables services to be used via the Internet without special hardware or software. The wireless LAN access point management server 16 is also installed in the cloud. Thus, the wireless LAN access point 14 is a wireless LAN access point managed via the cloud.

The information processing apparatus 12 may be any device having a communication function. Examples of the information processing apparatus 12 include, but not limited to, an image forming apparatus such as a multi-function peripheral (MFP), a projector (PJ), an interactive whiteboard (IWB: a whiteboard having an electronic whiteboard function having a mutual communication capability), an industrial machine, an image-capturing apparatus, a sound-collecting device, a medical device, a networked home appliance, an automobile (connected car), a laptop personal computer (PC), a mobile phone, a smartphone, a tablet terminal, a game console, a personal digital assistant (PDA), a wearable PC, and a desktop PC.

FIG. 1 illustrates a signal information processing apparatus 12 and a single wireless LAN access point 14. However, the configuration is not limited to this, and the network system may include a plurality of information processing apparatuses 12 and a plurality of wireless LAN access points 14. Thus, the information processing apparatus 12 is capable of managing a plurality of guest networks provided by the plurality of wireless LAN access points 14 in the facility. The guest network management server 15 is capable of communicating with the plurality of information processing apparatus 12 installed in one or a plurality of facilities and managing the plurality of guest networks managed by the respective information processing apparatuses 12 from outside the one or plurality of facilities.

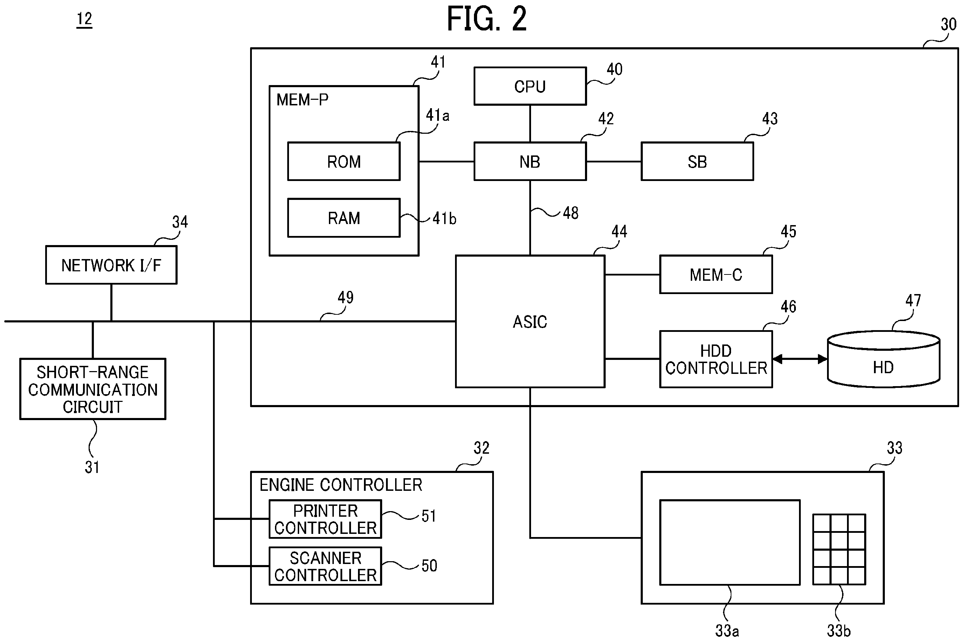

FIG. 2 is a diagram illustrating an example of a hardware configuration of an MFP that serves as the information processing apparatus 12. The MFP has a plurality of functions such as a scan function, a copy function, a printing function, and a fax function. The MFP includes a controller 30, a short-range communication circuit 31, an engine controller 32, an operation panel 33, and a network I/F 34.

The controller 30 includes a central processing unit (CPU) 40 which is a major portion of a computer, a system memory (MEM-P) 41, a northbridge (NB) 42, a southbridge (SB) 43, an application-specific integrated circuit (ASIC) 44, a local memory (MEM-C) 45, a hard disk drive (HDD) controller 46, and a hard disk (HD) 47. The NB 42 and the ASIC 44 are coupled to each other by an Accelerated Graphics Port (AGP) bus 48.

The CPU 40 is a controller that controls operation of the entire MFP. The NB 42 is a bridge that couples the CPU 40, the MEM-P 41, the SB 43, and the AGP bus 48 to one another. The NB 42 includes a memory controller that controls reading and writing from and to the MEM-P41, a peripheral component interconnect (PCI) master, and an AGP target.

The MEM-P 41 includes a ROM 41a as a memory that stores a program and data for implementing various functions of the controller 30. The MEM-P 41 also includes a RAM 41b as a memory that deploys the program and data, or as a rendering memory that stores rendering data for printing. The program stored in the RAM 41b may be stored for distribution in any computer-readable recording medium, such as a compact disc-read only memory (CD-ROM), a compact disc-recordable (CD-R), or a digital versatile disc-rewritable (DVD-RW), in an installable or executable file format.

The SB 43 is a bridge that couples the NB 42 with a PCI device and a peripheral device. The ASIC 44 is an image-processing-application-specific integrated circuit (IC) including hardware components for image processing. The ASIC 44 has a role of a bridge that couples the AGP bus 48, a PCI bus 49, the MEM-C 45, and the HDD controller 46 to one another. The ASIC 44 includes a PCI target, an AGP master, an arbiter (ARB) which is a core of the ASIC 44, a memory controller that controls the MEM-C 45, and a plurality of direct memory access controllers (DMACs) that perform rotation or the like of image data with a hardware logic. The ASIC 44 also includes a PCI unit that transfers data to and from a scanner controller 50 and a printer controller 51 via the PCI bus 49. The ASIC 44 may be coupled to a Universal Serial Bus (USB) interface or the Institute of Electrical and Electronics Engineers 1394 (IEEE1394) interface.

The MEM-C 45 is a local memory that is used as a buffer for image data to be copied or as a code buffer. The HD 47 is a storage that stores image data, font data used in printing, and forms. The HDD controller 46 controls reading and writing of data from and to the HD 47 under control of the CPU 40. The AGP bus 48 is a bus interface for a graphics accelerator card that is devised for accelerating processing of graphics. The AGP bus 48 directly accesses the MEM-P 41 with a high throughput to be able to accelerate the graphics accelerator card.

The short-range communication circuit 31 is a communication circuit that uses the near field communication (NFC), the Bluetooth (Registered Trademark), or the like.

The engine controller 32 includes the scanner controller 50 and the printer controller 51. The control panel 33 includes a panel display 33a and an operation panel 33b. The panel display 33a is implemented by, for example, a touch panel that displays current settings or a selection screen and receives a user input. The operation panel 33b includes a numeric keypad that accepts set values of various image forming conditions such as an image density setting condition and a start button that accepts an instruction for starting copying.

For example, the controller 30 controls rendering, communication, and input from the operation panel 33. The scanner controller 50 or the printer controller 51 includes an image processor for image processing such as error diffusion or gamma conversion.

With an application switching button of the operation panel 33, the user can sequentially switch between a document box function, a copy function, a printing function, and a fax function of the MFP to select one of the functions. In response to selection of each of the functions, the MFP enters the corresponding mode.

The network I/F 34 is an interface for performing data communication via a network. In the example illustrated in FIG. 1, the network I/F 34 connects the MFP to the first network 10 to enable data communication via the first network 10. The short-range communication circuit 31 and the network I/F 34 are electrically coupled to the ASIC 44 via the PCI bus 49.

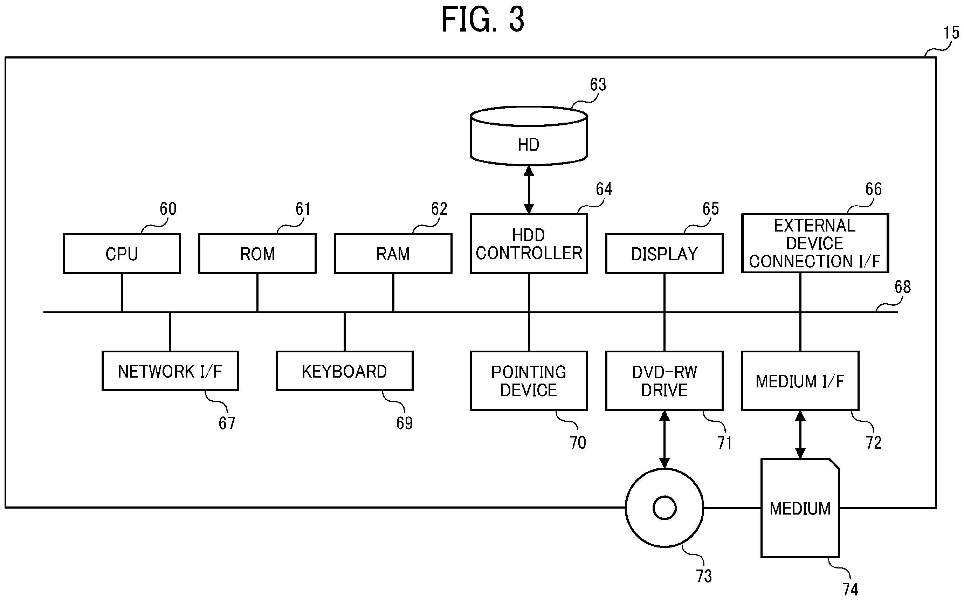

FIG. 3 is a diagram illustrating an example of a hardware configuration of the guest network management server 15. The wireless LAN access point management server 16 may also have substantially the same configuration. Description will be given on the assumption that the guest network management server 15 is a common computer. The guest network management server 15 includes a CPU 60, a ROM 61, a RAM 62, an HD 63, and an HDD controller 64. The guest network management server 15 also includes a display 65, an external device connection I/F 66, a network I/F 67, a data bus 68, a keyboard 69, a pointing device 70, a DVD-RW drive 71, and a medium I/F 72.

The CPU 60 controls operation of the entire guest network management server 15. The ROM 61 stores a program such as an initial program loader (IPL) for use in driving the CPU 60. The RAM 62 provides a work area for the CPU 60. The HD 63 stores various kinds of data such as a program. The HDD controller 64 controls reading and writing of various kinds of data from and to the HD 63 under control of the CPU 60. The display 65 displays various kinds of information such as a cursor, a menu, a window, characters, and an image.

The external device connection I/F 66 is an interface that couples various external devices to the guest network management server 15. Examples of the external devices include a USB memory and a printer. The network I/F 67 is an interface for performing data communication via a network. The data bus 68 is an address bus or a data bus that electrically couples the components such as the CPU 60 to one another.

The keyboard 69 is an example of an input device having a plurality of buttons with which a user inputs characters, numerals, or various instructions. The pointing device 70 is an example of an input device with which a user selects or executes various instructions, selects a processing target, or moves a cursor. The DVD-RW drive 71 controls reading and writing of various kinds of data from and to a DVD-RW 73, which is an example of a removable recording medium. The DVD-RW 73 is used as an example. However, the removable recording medium is not limited to this. In another example, the removable recording medium may be a CD-ROM, a CD-R, a CD-RW, a digital versatile disc-recordable (DVD-R), or the like. The medium I/F 72 controls reading and writing of data from and to a recording medium 74 such as a flash memory.

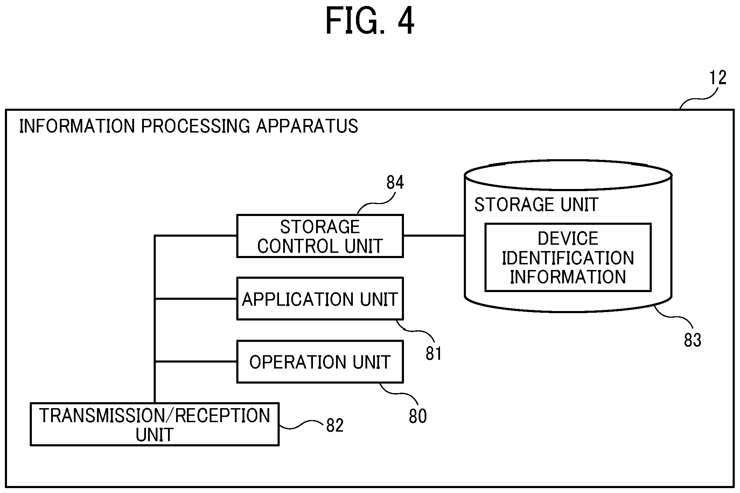

FIG. 4 is a block diagram illustrating an example of a functional configuration of the information processing apparatus 12. Each function of the information processing apparatus 12 can be implemented by processing circuitry such as the CPU 40. Examples of the processing circuitry include a processor programmed to implement each function in accordance with software such as a processor implemented by an electronic circuit, and a device such as an ASIC, a digital signal processor (DSP), a field-programmable gate array (FPGA), or a circuit module of the related art that is designed to implement each function.

The information processing apparatus 12 includes an operation unit 80, an application unit 81, a transmission/reception unit 82, a storage unit 83, and a storage control unit 84.

The operation unit 80 displays a screen for accepting a user operation. The operation unit 80 accepts information or a request input through a user operation. The application unit 81 acquires information from the guest network management server 15 and instructs the operation unit 80 to display the acquired information. In accordance with a request accepted by the operation unit 80, the application unit 81 instructs the guest network management server 15 to control a guest network.

The transmission/reception unit 82 communicates with an external device such as the guest network management server 15. The storage unit 83 stores device identification information for identifying the information processing apparatus 12. The device identification information may be any information with which a device can be identified. As the device identification information, for example, a Media Access Control (MAC) address of the information processing apparatus 12 or an identifier (ID) for uniquely identifying a device in any authentication system can be used. The storage control unit 84 performs control to read and write information from and to the storage unit 83. In the case where the information processing apparatus 12 is an image forming apparatus having a printing function such as an MFP, the information processing apparatus 12 may further include a printing unit that prints information acquired from the guest network management server 15.

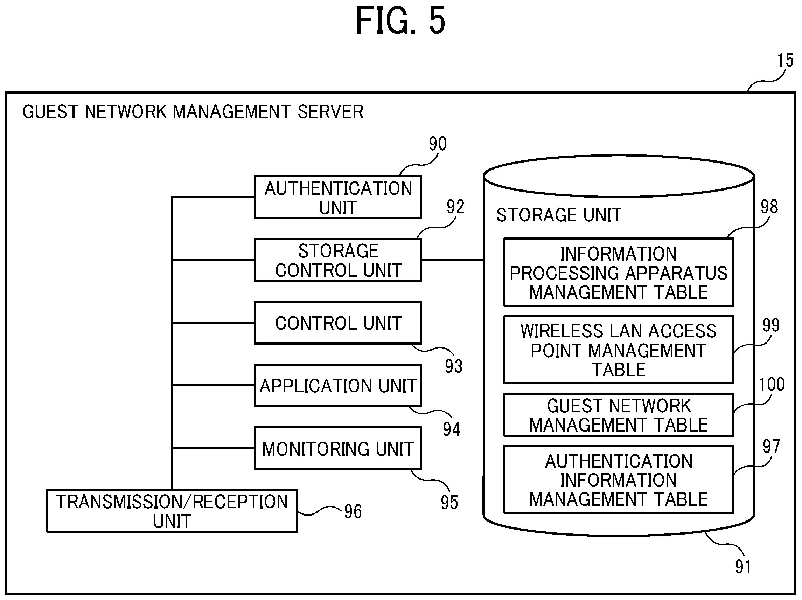

FIG. 5 is a block diagram illustrating an example of a functional configuration of the guest network management server 15. Each function of the guest network management server 15 can be implemented by processing circuitry such as the CPU 60. Examples of the processing circuitry include a processor programmed to implement each function in accordance with software such as a processor implemented by an electronic circuit, and a device such as an ASIC, a DSP, an FPGA, or a circuit module of the related art that is designed to implement each function.

The guest network management server 15 includes an authentication unit 90, a storage unit 91, a storage control unit 92, a control unit 93, an application unit 94, a monitoring unit 95, and a transmission/reception unit 96.

The authentication unit 90 performs an authentication process in response to an authentication request from an external device. Examples of the external device include the information processing apparatus 12 and the information terminals 20 to 22. The storage unit 91 stores an authentication information management table 97 used by the authentication unit 90 in the authentication process. The storage unit 91 also stores an information processing apparatus management table 98 for use in managing the information processing apparatus 12, a wireless LAN access point management table 99 for use in managing the wireless LAN access point 14, and a guest network management table 100 for use in managing a guest network. The storage control unit 92 performs control to read and write information from and to the storage unit 91.

The control unit 93 controls, via the wireless LAN access point management server 16, the wireless LAN access point 14 that establishes a connection to the guest network to relay data. Specifically, in accordance with a request relating to a setting of a guest network or a request for starting the use of a guest network or ending the use of a guest network from an external device, the control unit 93 instructs the wireless LAN access point management server 16 to perform an operation such as making the setting of the guest network, etc. The instruction is given to the wireless LAN access point management server 16 via the transmission/reception unit 96.

In accordance with a result of the instruction, the control unit 93 instructs the storage control unit 92 to update content of the table stored and managed in the storage unit 91.

Along with the transmission/reception unit 96, the application unit 94 is used to accept a request from an external device and functions as communication means. The application unit 94 provides an app that enables an operation to be performed from an external device. The app may be, for example, a web app or a web API. The web API is an app for calling a function provided by a program from an external program.

The monitoring unit 95 monitors a permitted use period in the guest network management table 100, and requests the control unit 93 to delete a corresponding guest network in response to an elapse of the permitted use period (expiration of the use time limit). In response to this request, the control unit 93 instructs the wireless LAN access point management server 16 to delete the guest network.

The transmission/reception unit 96 communicates with an external device. Specifically, the transmission/reception unit 96 communicates with the information processing apparatus 12, the wireless LAN access point management server 16, and the information terminals 20 to 22.

The guest network management server 15 can further include a generation unit (generation means) that generates a password which is a piece of connection information.

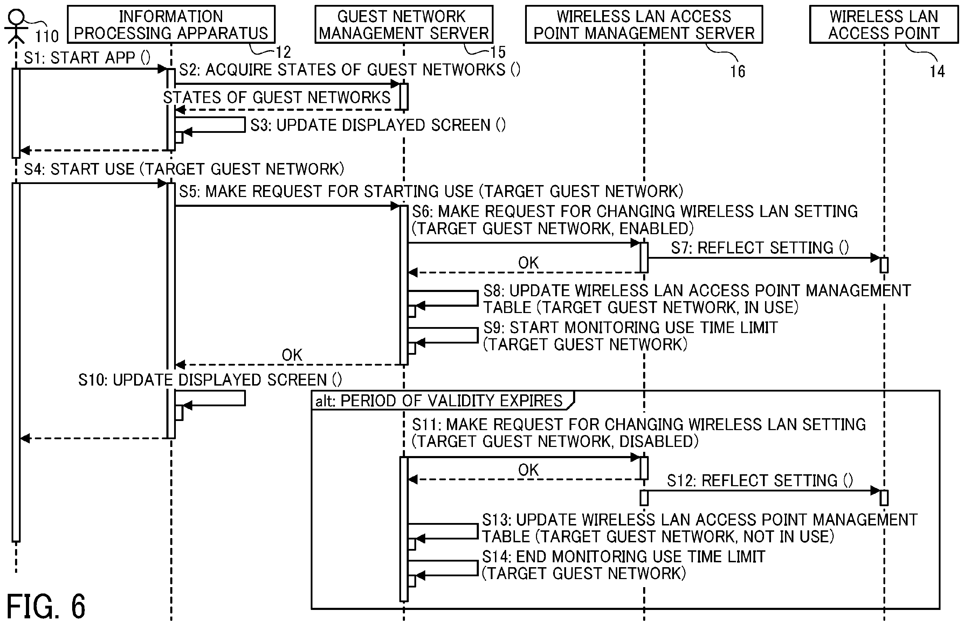

FIG. 6 is a sequence diagram illustrating a flow of a process from when the use of a guest network is started to when the use of the guest network is ended. A user 110 who is visiting a facility operates the information processing apparatus 12 installed in the facility to start an app installed on the information processing apparatus 12 (S1). In response to the app being started, the information processing apparatus 12 transmits an inquiry to the guest network management server 15 and acquires states of guest networks (S2). A state of a guest network refers to a use state of the guest network and indicates, for example, "in use" or "not in use". The information processing apparatus 12 reflects the acquired states in a screen and updates a displayed screen (S3).

The user 110 operates the information processing apparatus 12 to designate a guest network to be used and then input a request for starting the use of the guest network (S4). In response to the request for starting the use, the information processing apparatus 12 transmits, to the guest network management server 15, a request for starting the use of the guest network designated by the user 110 (S5). At this time, the information processing apparatus 12 transmits device identification information for uniquely identifying the information processing apparatus 12.

In response to receipt of the request for starting the use the guest network from the information processing apparatus 12, the guest network management server 15 instructs the wireless LAN access point management server 16 to change a setting in the wireless LAN access point 14 (S6). Specifically, the guest network management server 15 instructs the wireless LAN access point management server 16 to change the setting of the target guest network in the wireless LAN access point 14 from "disabled" to "enabled". In response to the instruction for changing the setting, the wireless LAN access point management server 16 changes the setting in the wireless LAN access point 14 from "disabled" to "enabled", and reflects the setting (S7). The wireless LAN access point management server 16 notifies the guest network management server 15 that the setting is reflected in the wireless LAN access point 14.

In response to the notification from the wireless LAN access point management server 16, the guest network management server 15 updates the wireless LAN access point management table 99 (S8). Specifically, the guest network management server 15 updates the state of the target guest network in the guest network management table 100 to "in use". The guest network management server 15 starts monitoring the use time limit of the target guest network (S9). The guest network management server 15 notifies the information processing apparatus 12 that monitoring is started.

In response to the notification indicating that the guest network management server 15 has started monitoring the target guest network, the information processing apparatus 12 updates the displayed screen (S10). The target guest network is monitored until the use time limit expires. If the user 110 ends the use of the guest network before the use time limit, the guest network management server 15 regards that the use time limit has expired at the time of the end of the use and stops monitoring the target guest network.

In response to the expiration of the use time limit of the target guest network, the guest network management server 15 instructs the wireless LAN access point management server 16 to change the setting in the wireless LAN access point 14 (S11). Specifically, the guest network management server 15 instructs the wireless LAN access point management server 16 to change the setting of the target guest network in the wireless LAN access point 14 from "enabled" to "disabled". In response to the instruction for changing the setting, the wireless LAN access point management server 16 changes the setting in the wireless LAN access point 14 from "enabled" to "disabled" and reflects the setting (S12). The wireless LAN access point management server 16 notifies the guest network management server 15 that the setting is reflected in the wireless LAN access point 14.

In response to receipt of the notification from the wireless LAN access point management server 16, the guest network management server 15 updates the wireless LAN access point management table 99 (S13). Specifically, the guest network management server 15 updates the state of the target guest network in the guest network management table 100 to "not in use". The guest network management server 15 stops monitoring the use time limit of the target guest network (S14). The guest network management server 15 may notify the information processing apparatus 12 that monitoring is ended. In this case, the information processing apparatus 12 updates the displayed screen.

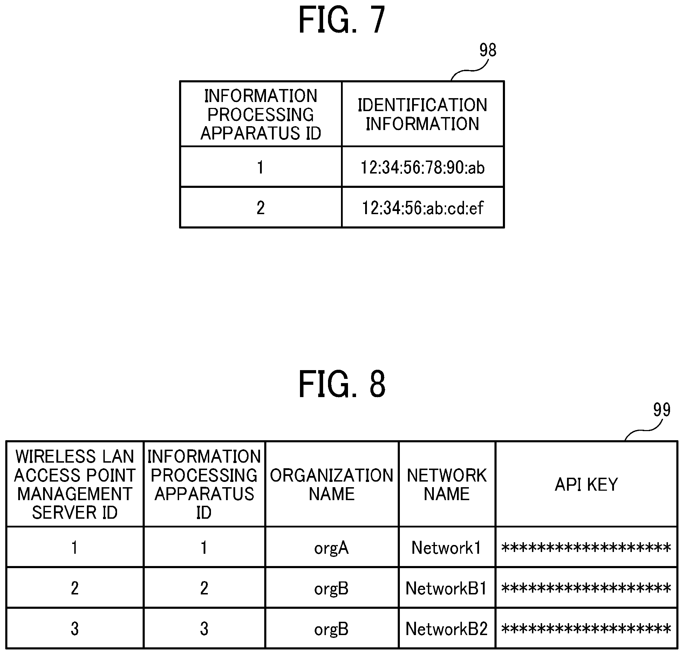

The tables used in the process illustrated in FIG. 6 will be described in detail. FIG. 7 is a diagram illustrating an example of the information processing apparatus management table 98. The information processing apparatus management table 98 manages a list of the information processing apparatuses 12. Each information processing apparatus 12 has identification information for uniquely identifying the information processing apparatus 12. The information processing apparatus management table 98 stores the identification information of each information processing apparatus 12 in association with an information processing apparatus ID of the information processing apparatus 12. For example, a MAC address can be used as the identification information. In the example illustrated in FIG. 7, two information processing apparatuses 12 are managed in the information processing apparatus management table 98.

FIG. 8 is a diagram illustrating an example of the wireless LAN access point management table 99. The wireless LAN access point management table 99 is used when the wireless LAN access point management server 16 is controlled and manages information for identifying the wireless LAN access point 14 associated with each information processing apparatus 12.

Information managed in the wireless LAN access point management table 99 includes a wireless LAN access point management server ID and an information processing apparatus ID. The wireless LAN access point management server ID is information for identifying the wireless LAN access point management server 16 to be managed. The information processing apparatus ID is information for identifying the information processing apparatus 12. The wireless LAN access point management server ID and the information processing apparatus ID have a one-to-one relationship in FIG. 8. However, the configuration is not limited to this. Thus, the wireless LAN access point management server ID and the information processing apparatus ID may have a multiple-to-one or one-to-multiple relationship.

The information managed in the wireless LAN access point management table 99 includes, as the information for identifying the wireless LAN access point 14, an organization name of an organization of the wireless LAN access point 14, a network name, and an API key for use in authentication. The organization name is, for example, a name of a department or group in which the wireless LAN access point 14 is installed. When the guest network management server 15 transmits an instruction to the wireless LAN access point management server 16, the guest network management server 15 transmits the instruction to an app by using an API of the wireless LAN access point management server 16. The API key is authentication information for use in authentication for an access to the API of the wireless LAN access point management server 16. These pieces of information are merely an example, and any information that enables identification of the wireless LAN access point 14 may be used.

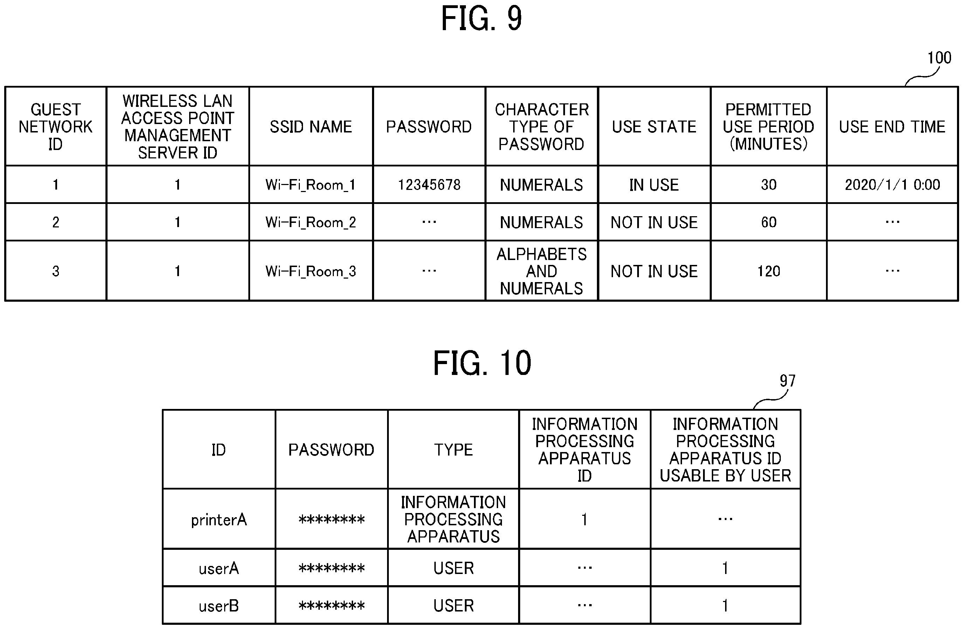

FIG. 9 is a diagram illustrating a first example of the guest network management table 100. The guest network management table 100 is used when the wireless LAN access point management server 16 is controlled and manages information regarding guest networks.

Information managed in the guest network management table 100 includes a guest network ID and a wireless LAN access point management server ID of the wireless LAN access point management server 16. The guest network ID is information for identifying a guest network. The information managed in the guest network management table 100 also includes, as the information regarding a guest network, a service set identifier (SSID) name, a password, a character type of the password, a use state, a permitted use period, a use end time, etc. These pieces of information are merely an example, and the information regarding a guest network is not limited to these pieces of information.

The SSID name is an SSID which is identification information of a guest network and is constituted by any character string. The password is a password for use in establishing a connection to the guest network. The password may be constituted by any character string input by a user or a character string generated at random each time a guest network is created. In the scheme of generating a character string, an option for generating a numeric character string or an option for generating an alphanumeric character string may be made selectable. In FIG. 9, the scheme of generating a character string is employed, a field for the character type of the password is provided so as to enable the option for numerals alone or the option for alphabets and numerals to be selected, so that it can be determined which type of character string is to be generated. Any existing algorithm may be used to generate a password. The connection information includes an SSID and a password.

As the use state, whether the guest network is in use or not in use is set. When the guest network is in use, "in use" is set. When the guest network is not in use, "not in use" is set. The permitted use period is a period from the start to end of the use of the guest network and is designated by the user. The user can set any period. A guest network is created in the following manner. In response to a request for starting the use of a guest network, the guest network management server 15 requests the wireless LAN access point 14 to enable a setting of the SSID via the wireless LAN access point management server 16. The wireless LAN access point 14 then enables the setting of the SSID. Consequently, the guest network is created. Thus, the guest network can be deleted in the following manner. The guest network management server 15 requests the wireless LAN access point 14 to disable the setting of the SSID via the wireless LAN access point management server 16. The wireless LAN access point 14 then disables the setting of the SSID. Consequently, the guest network is deleted.

The number of wireless LAN access points 14 controlled by the wireless LAN access point management server 16 may be one or two or more. The number of guest networks provided by the wireless LAN access point 14 may be one or two or more. In the example illustrated in FIG. 9, the wireless LAN access point management server 16 manages two or more guest networks. However, the number of guest networks may be one.

FIG. 10 is a diagram illustrating an example of the authentication information management table 97. The authentication information management table 97 manages authentication information for use in an authentication process performed when the information processing apparatus 12 or any of the information terminals 20 to 22 requests an app that provides a function of the guest network management server 15 to use the function. The authentication information is information to be used for preventing the unauthorized use of the guest network management server 15.

The guest network management server 15 receives authentication information from the information processing apparatus 12 or any of the information terminals 20 to 22, and determines whether the received authentication information matches authentication information managed in the authentication information management table 97 to perform authentication. The information processing apparatus 12 and the information terminals 20 to 22 may transmit a Hypertext Transfer Protocol (HTTP) request including the authentication information, or may, in response to a request for the authentication information in a form of BASIC authentication, input and transmit the authentication information.

The authentication information includes a password and an ID for identifying a device or a user. The authentication information management table 97 includes, in addition to the authentication information, type information for distinguishing a device. The type information is, for example, "information processing apparatus" or "user". The "user" indicates an information terminal. The type information "information processing apparatus" is stored in association with the information processing apparatus ID. The type information "user" is stored in association with an information processing apparatus ID of an information terminal that is usable by the user.

When a user starts the use of a guest network, the guest network management server 15 uses the ID and the password input by the user to perform authentication with reference to the authentication information management table 97 illustrated in FIG. 10. If the authentication is successful, the guest network management server 15 uses the information processing apparatus ID associated with the ID and the password in the authentication information management table 97 illustrated in FIG. 10 to identify the wireless LAN access point management server ID with reference to the wireless LAN access point management table 99 illustrated in FIG. 8. The guest network management server 15 identifies the guest network ID from the wireless LAN access point management server ID with reference to the guest network management table 100 illustrated in FIG. 9. When the user starts the use from the information processing apparatus 12, the identification information is transmitted as the device identification information. Thus, the guest network management server 15 identifies the information processing apparatus ID from the identification information with reference to the information processing apparatus management table 98 illustrated in FIG. 7.

The guest network management server 15 transmits a list of guest networks having the identified guest network IDs. The list is then displayed. The user designates a guest network, the character type of the password, the permitted use period, etc. Then, an instruction for start the use is accepted. The guest network management server 15 generates a password when the character type of the password is designated and the password is to be generated. The guest network management server 15 transmits the SSID and the password which serve as the connection information. At this time, the guest network management server 15 enables, via the wireless LAN access point management server 16, the setting of the guest network designated by the user in the wireless LAN access point 14 to set the guest network in a usable state.

The user inputs and sets the SSID and the password in the information terminal to be able to start the use of the guest network.

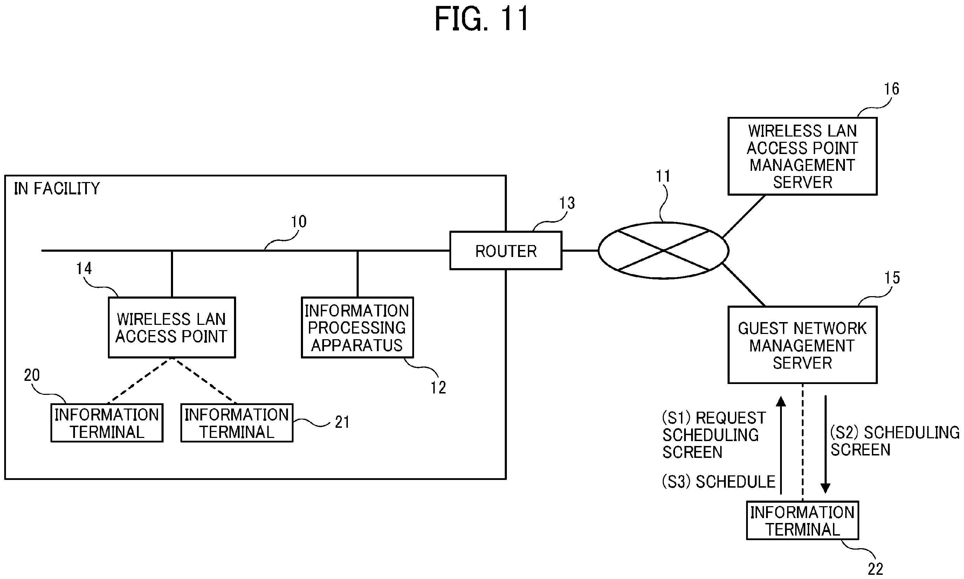

Use examples of the network system will be described below. FIG. 11 is a diagram illustrating a first use example of the network system. The user 110 who is visiting a facility can schedule the use of a guest network in advance in the guest network management server 15 from their information terminal 22. Description will be given on the assumption that the user 110 uses the information terminal 22. The guest network management server 15 receives a request for a scheduling screen from the information terminal 22 located outside the facility (S1). The guest network management server 15 transmits scheduling screen information to the information terminal 22 to provide the scheduling screen (S2). The information terminal 22 accepts schedule information input by the user 110 and transmits the schedule information to the guest network management server 15 to schedule the use of the guest network (S3). The guest network management server 15 stores details of the schedule indicated by the received schedule information.

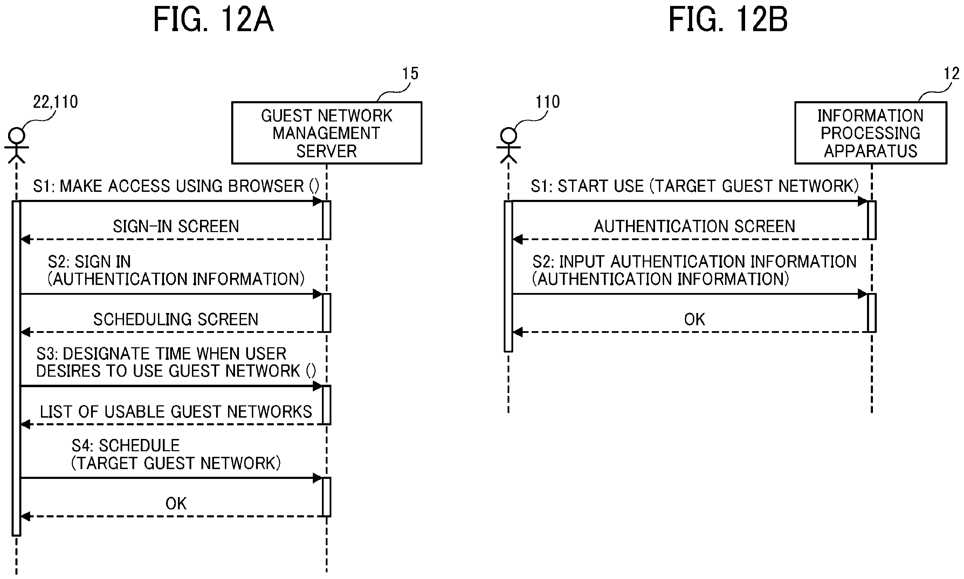

A process of scheduling the use of a guest network will be described with reference to FIGs. 12A and 12B. As illustrated in FIG. 12A, the user 110 uses a browser of their information terminal 22 to access the guest network management server 15 (S1). In response to the access from the information terminal 22, the guest network management server 15 requests the information terminal 22 to provide authentication information. The guest network management server 15 provides a sign-in screen to the information terminal 22.

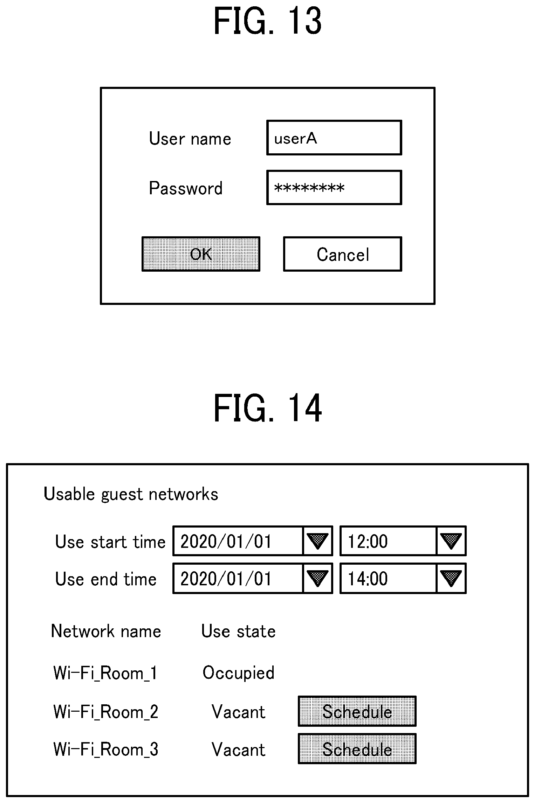

FIG. 13 is an illustration of an example of the sign-in screen. The sign-in screen has fields in which a user name and a password are input. The user 110 inputs the user name and the password associated with the user name to the information terminal 22. The information terminal 22 transmits the user name and the password, which are the same as the authentication information registered in advance, to the guest network management server 15.

Referring back to FIG. 12A, the guest network management server 15 receives the authentication information from the information terminal 22 (S2), and performs an authentication process in accordance with the received authentication information. If the authentication result indicates success, the guest network management server 15 transmits the scheduling screen information to the information terminal 22 to provide the scheduling screen. The user 110 designates the time when the user 110 desires to use the guest network in the scheduling screen displayed on the information terminal 22 (S3). The information terminal 22 transmits information on the time designated by the user 110 to the guest network management server 15. In response to designation of the time for use, the guest network management server 15 provides a list of usable guest networks.

FIG. 14 is an illustration of an example of the scheduling screen. The scheduling screen has fields in which a use start time and a use end time are designated. The user 110, for example, selects times to designate the use start time and the use end time. The information terminal 22 transmits information on the times designated by the user 110 to the guest network management server 15, acquires a list of usable guest networks from the guest network management server 15, and displays the list in the scheduling screen.

In the example illustrated in FIG. 14, the list of guest networks associated with the information processing apparatus 12 that is usable by the user 110, information indicating the use states of the respective guest networks, and schedule bottoms for scheduling the use of the respective networks are displayed. The user 110 selects a guest network having a vacancy from the list of guest networks and presses the schedule button associated with the selected guest network to schedule the use.

Referring back to FIG. 12A, the information terminal 22 transmits schedule information for the guest network designated by the user 110 to the guest network management server 15 to schedule the use (S4). The guest network management server 15 stores details of the schedule indicated by the schedule information in association with the information regarding the guest network in the guest network management table 100 illustrated in FIG. 9. The details of the schedule can be associated based on the SSID name of the guest network designated in the details of the schedule. The guest network management server 15 notifies the information terminal 22 that scheduling has been completed.

As illustrated in FIG. 12B, the user 110 visits the facility on the scheduled date and operates the information processing apparatus 12 installed in the facility to input a request for starting the use of the scheduled guest network (S1). In response to the request for starting the use, the information processing apparatus 12 displays an authentication screen. The user 110 inputs authentication information in the displayed authentication screen (S2). The information processing apparatus 12 performs an authentication process using the input authentication information. The information processing apparatus 12 notifies the user 110 that authentication is successful and permits the user 110 to start the use of the scheduled guest network. The processing performed thereafter is substantially the same as steps S1 to S14 illustrated in FIG. 6.

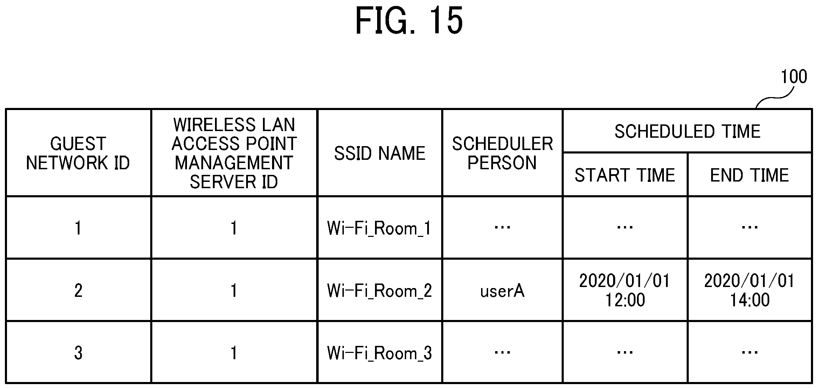

FIG. 15 is a diagram illustrating a second example of the guest network management table 100. Similarly to the guest network management table 100 illustrated in FIG. 9, the guest network management table 100 illustrated in FIG. 15 includes the guest network ID, the wireless LAN access point management server ID, and the SSID name. The guest network management table 100 illustrated in FIG. 15 further includes information on a scheduler person who is the user 110 and a scheduled time. The scheduled time includes a start time and an end time. FIG. 15 omits illustration of the password, the character type of the password, the use state, the permitted use period, and the use end time. When the use of the guest network is started, the end time of the scheduled time is set as the use end time, and a period calculated from the start time and the end time of the scheduled time is set as the permitted use period. In this manner, the permitted use period and the use end time can be set, and the scheduled time can be then deleted.

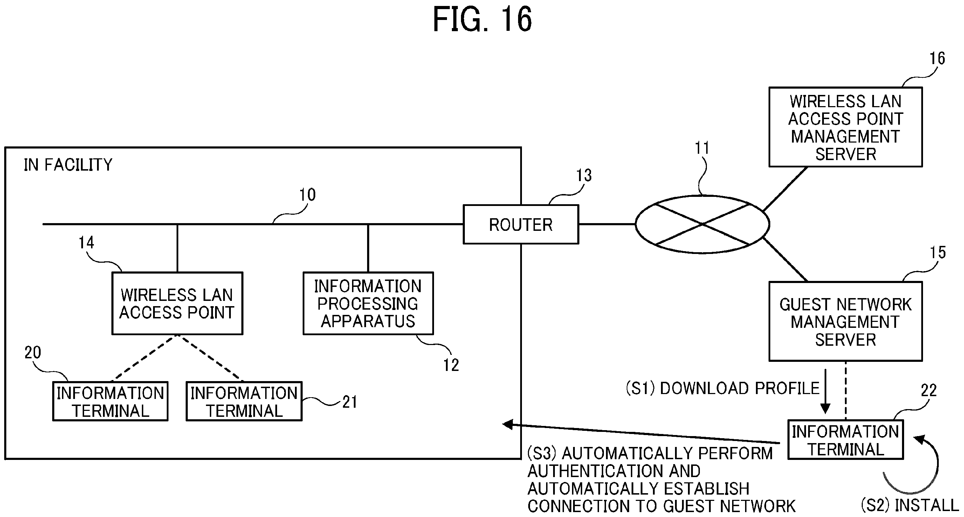

FIG. 16 is a diagram illustrating a second use example of the network system. When the user 110 actually visits a facility and uses a guest network, the user 110 is to display connection information on the information processing apparatus 12 and is to set the connection information in the information terminal 22.

Accordingly, the information terminal 22 may download setting information (profile) for setting the connection information from the guest network management server 15. The profile may be a Wi-Fi (registered trademark) configuration profile used in iOS (registered trademark), for example, and can include information on a period of validity of the profile in addition to the SSID and the password which serve as the connection information. The SSID and the password are obtained from the guest network management table 100 illustrated in FIG. 9. The information on the period of validity is information obtained from the start time and the end time of the use in the detailed of the schedule. The period of validity is set for the profile and the profile includes the information on the period of validity. Thus, when the period of validity expires, the profile can be automatically deleted from the information terminal 22.

The information terminal 22 downloads a profile (S1). The information terminal 22 installs the profile (S2) thereon. The user 110 automatically performs authentication and starts the use of the guest network (S3). This may save the user 110 work for selecting a guest network from the list of guest networks and for inputting the password. The profile is automatically deleted. Thus, even if the guest network is enabled, the information terminal 22 is automatically disconnected from the guest network. Consequently, the service quality of the temporary network can be increased.

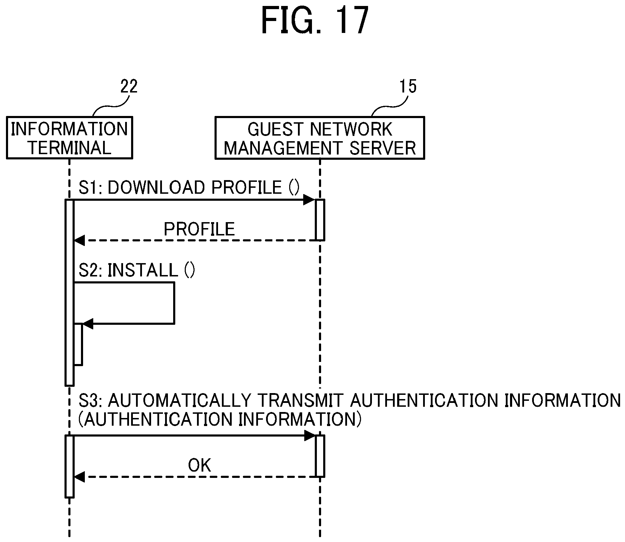

With reference to FIG. 17, a process performed after scheduling of the use of a guest network is completed. After scheduling of the use of a guest network is completed, the information terminal 22 downloads, from the guest network management server 15, a profile for use in automatic connection to the scheduled guest network (S1). The information terminal 22 installs thereon the profile downloaded from the guest network management server 15 (S2).

When the user 110 visits the facility on the scheduled date, the information terminal 22 automatically transmits authentication information such as the user name and the password of the user 110 (S3). The guest network management server 15 receives the authentication information and performs an authentication process. If authentication is successful, the guest network management server 15 returns information indicating successful authentication to the information terminal 22, and enables, via the wireless LAN access point management server 16, the setting of the guest network in the wireless LAN access point 14. In response to the setting of the guest network being enabled, the information terminal 22 establishes a connection to the wireless LAN access point 14 by using the set SSID and password, and the user 110 starts the use of the guest network.

The permitted use period is also checked in the authentication process. Thus, the user 110 is not permitted to use the guest network as soon as the user 110 arrives at the facility. Upon the current time reaching the use start time of the permitted use period, authentication becomes successful and the user 110 is permitted to use the guest network. The information terminal 22 can automatically transmit information such as the user name at a regular time interval until the information terminal 22 receives information indicating successful authentication. Since the profile is installed on the information terminal 22, the information terminal 22 also holds information on the permitted use period. Thus, the information terminal 22 can automatically transmit the information such as the user name upon the current time reaching the use start time of the permitted use period.

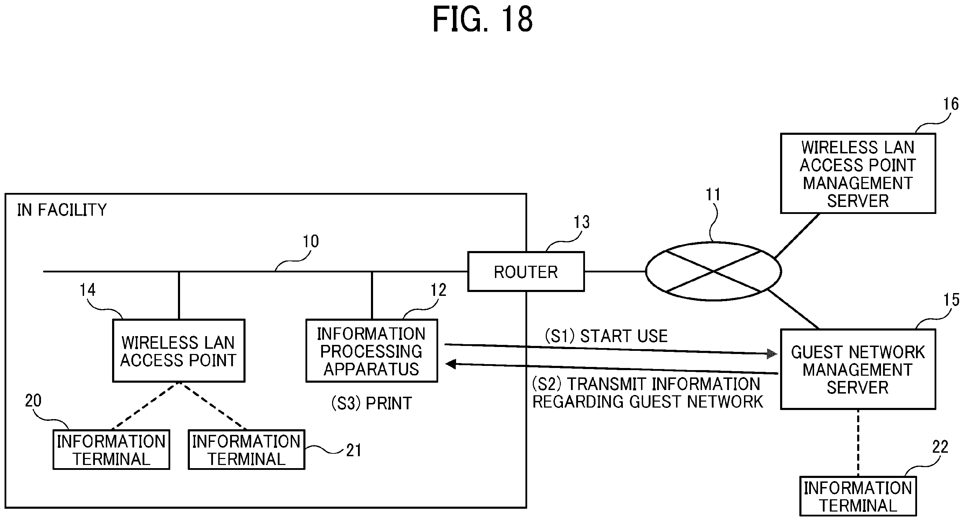

FIG. 18 is a diagram illustrating a third use example of the network system. In an example illustrated in FIG. 18, the information processing apparatus 12 is an image forming apparatus having a printing function such as an MFP and is capable of printing information regarding a guest network. When the information regarding the guest network is printed, the user 110 can set the SSID and the password and check a period of validity of the guest network with reference to paper having the printed information at a location other than an installed location of the information processing apparatus 12.

The user 110 selects a guest network in an operation screen displayed on the information processing apparatus 12 and starts the use of the guest network (S1). When the user 110 selects the scheduled guest network, the information processing apparatus 12 requests the user 110 to input authentication information. In response to the user 110 being confirmed as the scheduler person who scheduled the use, the user 110 is permitted to start the use of the guest network.

The information processing apparatus 12 acquires information regarding the selected guest network from the guest network management server 15 (S2) and prints (outputs) the information on paper (S3). The information regarding the guest network is information such as the SSID name, the password for the network, and the use end time.

The information regarding the guest network may be printed at any timing before the use time limit. In the case where the user 110 uses the information processing apparatus 12 to start the use of the guest network, the timing is desirably a timing when the user 110 is located at the installed location of the information processing apparatus 12, for example, a timing immediately after the user 110 starts the use.

The user 110 may desire to additionally print information regarding a guest network after starting the use of the guest network. Examples of such a case include a case where the user 110 has lost the printed paper. In this case, the user 110 can select the guest network in the operation screen displayed on the information processing apparatus 12 and input a printing instruction. To prevent a third party from acquiring the information regarding the guest network in an unauthorized manner, the information processing apparatus 12 requests the user 110 to input the authentication information in the case of additional printing.

The authentication information which the user 110 is requested to input may be the password for the target guest network or authentication information of the user. The authentication information of the user is the user name and the password of the user. In the case where the information processing apparatus 12 includes a reading device capable of reading information by short-range wireless communication in a non-contact manner, the authentication information of the user may be read from the information terminal 22 or the like carried by the user and may be input. The authentication information of the user has been described to be the user name and the password. However, the authentication information of the user may be information acquired using a device such as an image-capturing apparatus or an audio input device and may be information on a physical or behavioral feature such as the fingerprint, iris, vein, voiceprint, facial shape, or handwriting of the user, for example.

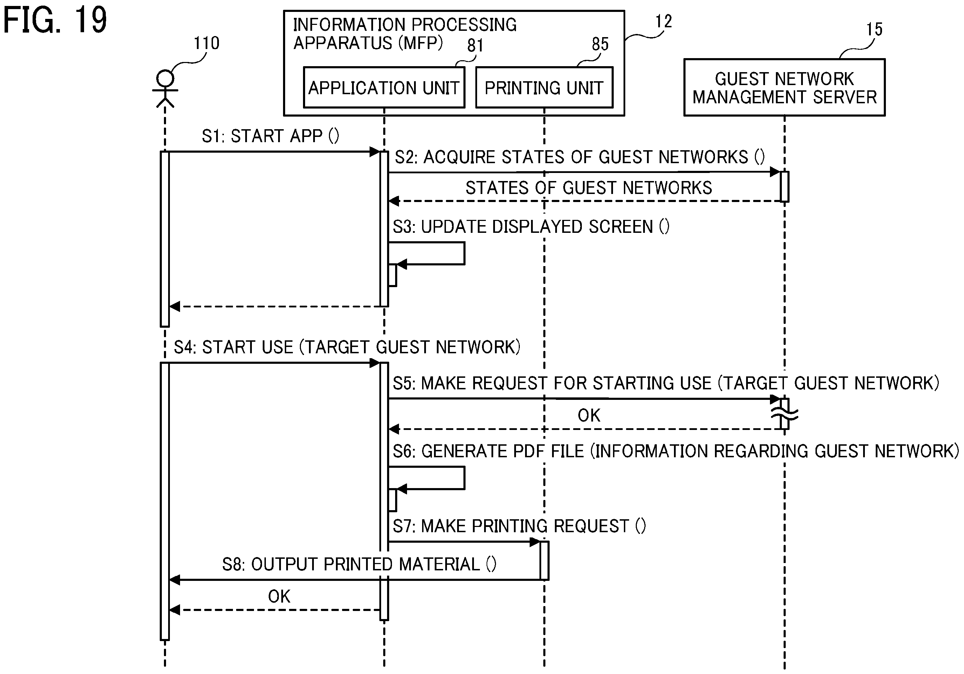

A process of printing (outputting) information regarding a guest network using the information processing apparatus 12 will be described with reference to FIG. 19. The information processing apparatus 12 includes the application unit 81 and a printing unit 85 that performs printing.

The user 110 who is visiting a facility operates the information processing apparatus 12 installed in the facility and starts an app of the information processing apparatus 12 (S1). Consequently, the application unit 81 starts operating, transmits an inquiry to the guest network management server 15, and acquires the states of guest networks (S2). The application unit 81 reflects the acquired states in a screen and updates the displayed screen (S3).

The user 110 selects a guest network to be used and inputs an instruction for starting the use of the guest network to the information processing apparatus 12 (S4). In response to the instruction for starting the use, the application unit 81 transmits, to the guest network management server 15, a request for starting the use of the guest network designated by the user 110 (S5). At this time, the application unit 81 transmits device identification information for uniquely identifying the information processing apparatus 12 via the transmission/reception unit 82.

The processing performed by the guest network management server 15 and the wireless LAN access point management server 16 is substantially the same as the processing of step S6 to S9 illustrated in FIG. 6. Thus, description is omitted.

In response to receipt of a notification indicating that the guest network management server 15 has started monitoring the target guest network, the application unit 81 of the information processing apparatus 12 generates a Portable Document Format (PDF) file (S6). The PDF file is a file of an image for use in printing the information regarding the guest network on paper. The application unit 81 sends the generated PDF file to the printing unit 85 and requests the printing unit 85 to perform printing (S7). The printing unit 85 performs printing in accordance with the PDF file (S8). The user 110 receives the output paper, and can check the use end time as occasion arises. The printing unit 85 notifies the application unit 81 that printing is finished.

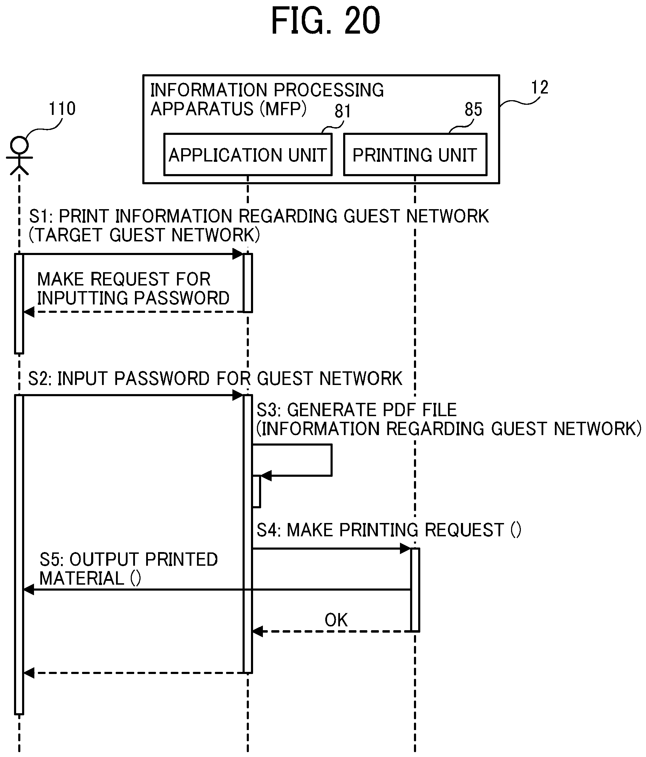

When printing is additionally performed, as illustrated in FIG. 20, the user 110 operates the information processing apparatus 12 and inputs a request for printing information regarding a guest network (S1). The application unit 81 of the information processing apparatus 12 provides a sign-in screen that requests the user 110 to input authentication information. The user 110 inputs, as the authentication information, the password for the guest network in an input field of the displayed sign-in screen (S2).

The application unit 81 performs authentication in accordance with the information regarding the guest network acquired from the guest network management server 15, and generates a PDF file if the authentication is successful (S3). If the authentication is unsuccessful, the application unit 81 notifies the user 110 of an error. The user 110 who is notified of an error can input the authentication information again in the sign-in screen.

The application unit 81 sends the generated PDF file to the printing unit 85 and requests the printing unit 85 to perform printing (S4). The printing unit 85 performs printing in accordance with the PDF file (S5). The printing unit 85 notifies the application unit 81 that printing is finished.

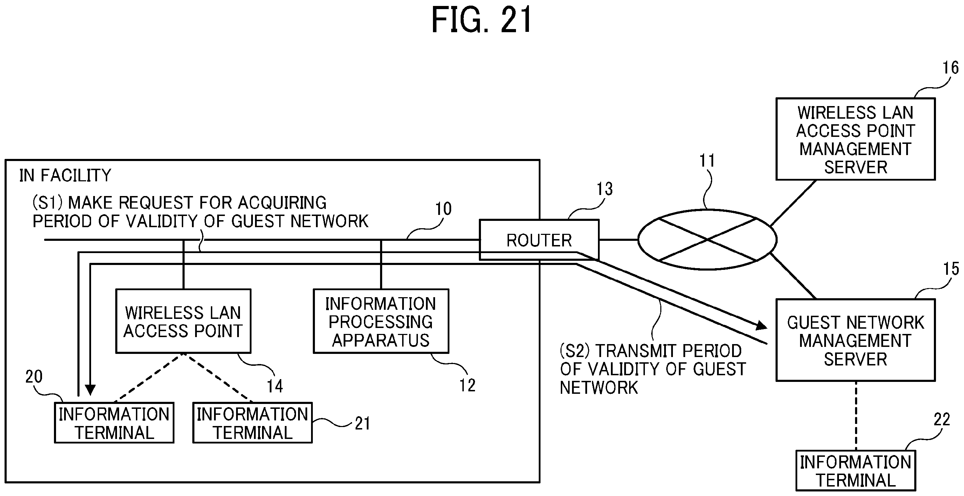

FIG. 21 is a diagram illustrating a fourth use example of the network system. In the case where the information processing apparatus 12 is a device not having a printing function, information regarding a guest network can be referred to with the information terminal 20 used by the user 110 so that the user 110 can easily check the use end time of the guest network. In this example, since the user 110 has already started the use of the guest network, description will be given on the assumption that the information terminal of the user 110 is the information terminal 20.

The information terminal 20 transmits a request for acquiring a period of validity of the guest network as the information regarding the guest network (S1). In response to receipt of the request, the guest network management server 15 transmits information on the requested period of validity of the guest network to the information terminal 20 (S2). The information terminal 20 displays the received period of validity in a screen.

In this example, the information terminal 20 acquires (receives) the information regarding the guest network and displays the information in the screen. However, the configuration is not limited to this. The information terminal 20 may transmit an instruction for ending the use of the guest network so as to end the use of the guest network earlier than scheduled.

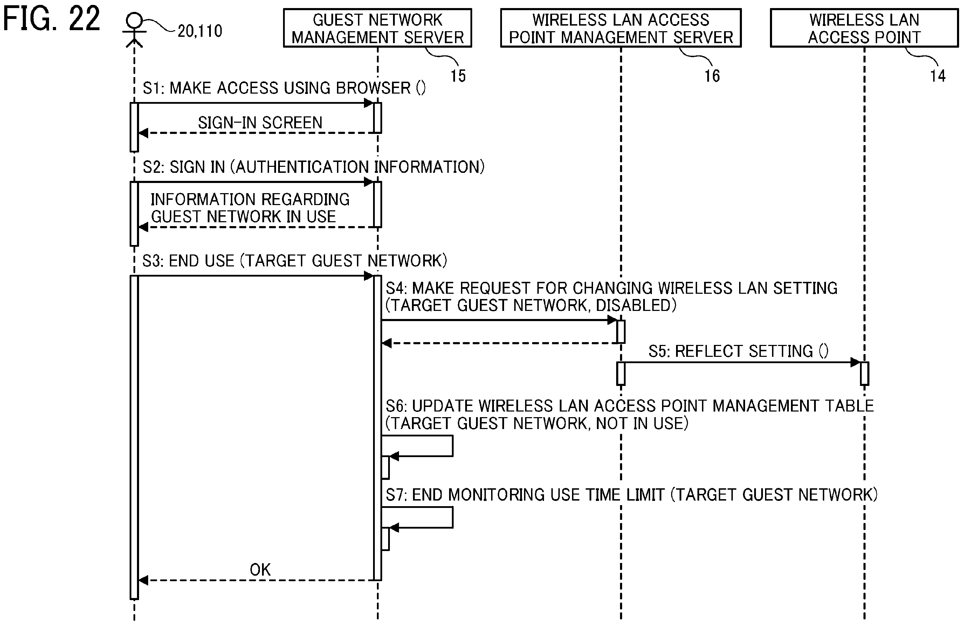

A process of ending the use of a guest network earlier than scheduled with reference to information regarding the guest network in the information terminal 20 will be described with reference to FIG. 22. The user 110 uses a browser installed in the information terminal 20 to transmit a connection request to the guest network management server 15 and access the guest network management server 15 (S1). The guest network management server 15 provides a sign-in screen that requests the user 110 to input authentication information.

The information terminal 20 displays the sign-in screen and accepts input of the authentication information from the user 110. The information terminal 20 transmits the input authentication information to the guest network management server 15 to sign in (S2). The guest network management server 15 performs authentication in accordance with the received authentication information. If the authentication is successful, the guest network management server 15 transmits information regarding the guest network in use to the information terminal 20. If the authentication is unsuccessful, the guest network management server 15 notifies the user 110 of an error.

When the user ends the use of the guest network, the information terminal 20 accepts an instruction for ending the use of the guest network from the user 110. The information terminal 20 designates the guest network and transmits a request for ending the use to the guest network management server 15 (S3).

To "disable" the "enabled" target guest network, the guest network management server 15 transmits, to the wireless LAN access point management server 16, a request for changing the setting in the wireless LAN access point 14, that is, a request for deleting the connection information (S4). The wireless LAN access point management server 16 causes the wireless LAN access point 14 managed thereby to reflect the setting to change the setting from "enabled" to "disabled" (S5). Consequently, the connection information is deleted. The wireless LAN access point management server 16 notifies the guest network management server 15 that the setting has been changed.

In response to receipt of the notification from the wireless LAN access point management server 16, the guest network management server 15 updates the guest network management table 100 (S6). In this case, the guest network management server 15 changes the use state of the target guest network in the guest network management table 100 from "in use" to "not in use". The guest network management server 15 ends monitoring the target guest network (S7).

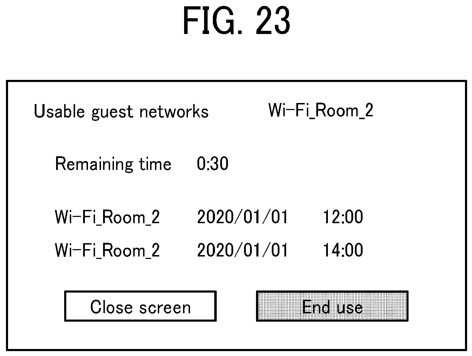

When the user 110 ends the use of the guest network from the information terminal 20, the user can request the information regarding the guest network and input an instruction for ending the use in the screen displayed on the information terminal 20. A screen illustrated in FIG. 23 may be used as the screen displayed on the information terminal 20. The screen illustrated in FIG. 23 includes, as the information regarding the guest network in use, the SSID of the guest network, the use start time, the use end time, and the remaining time. The screen further includes two buttons. The two buttons are a close screen button and an end use button. When the user 110 desires to end the use before the use end time, the user 110 can press the end use button to end the use.

As described above, the guest network management server 15 that manages guest networks is provided, and an app that enables the use from the information processing apparatus 12 and the information terminals 20 to 22 is installed. In this manner, the convenience of a guest network can be improved. Even if the information processing apparatus 12 fails to operate normally because of a trouble or the like and a function of monitoring the time fails to work, the guest network management server 15 monitors the time. Thus, a situation can be avoided in which the network is kept in a usable state even after a predetermined time has passed. Since a cloud server is used as the guest network management server 15, the server down is unlikely to be caused by too many accesses. Thus, a highly reliable time-limited network system can be implemented.

While one embodiment of the present disclosure has been described above, the present disclosure is not limited to the embodiment described above. Modifications such as alteration or deletion of an element of the embodiment or addition of another element to elements of the present embodiment may be made within the scope that can be conceived by a person skilled in the art. It should be understood that each embodiment is within the scope of the present disclosure as long as the embodiment provides the operations and advantageous effects of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked process apparatuses. The process apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A management server (15), comprising:
communication means (94, 96) for receiving a request relating to a network to be used; and
control means (93) for controlling, based on the received request, a relay device configured to establish a connection to the network to relay data,
wherein in response to an elapse of a permitted use period of the network, the control means (93) instructs the relay device to disconnect the connection to the network.

2. The management server according to claim 1, wherein in response to the communication means (94, 96) receiving a request for ending use of the network, the control means (93) instructs the relay device to disconnect the connection to the network.

3. The management server according to claim 1 or 2, further comprising:
storage means (91) for storing information on the network,
wherein in response to the communication means (94, 96) receiving a request for scheduling use of the network, the control means (93) causes the storage means (91) to store details of the schedule in association with the information on the network.

4. The management server according to claim 3, wherein the communication means (94, 96) transmits, to an information processing apparatus that has transmitted the request for scheduling, setting information to be set for establishing the connection to the network, the setting information being obtained from the information on the network.

5. The management server according to claim 4, wherein the communication means (94, 96) transmits the setting information including a setting of a period of validity based on the details of the schedule.

6. The management server according to any one of claims 1 to 5, wherein in response to receipt of a request for checking a period of validity of the network, the communication means (94, 96) transmits, to an information processing apparatus that has transmitted the request for checking, information on the period of validity of the network based on the permitted use period.

7. The management server according to any one of claims 1 to 5, wherein in response to receipt of a request for acquiring information on the network, the communication means (94, 96) transmits, to an information processing apparatus that has a printing function and has transmitted the request for acquiring, the information on the network including the permitted use period.

8. The management server to any one of claims 1 to 7,
wherein information on the network includes a service set identifier (SSID) name, and
wherein the communication means (94, 96) transmits input screen information for use in accepting information for designating a character string constituting the SSID name.

9. The management server according to any one of claims 1 to 8, wherein in response to receipt of a connection request from an information processing apparatus, the communication means (94, 96) transmits, to the information processing apparatus, a request for inputting authentication information.

10. The management server according to claim 9, further comprising:
generation means for generating a random character string as the authentication information.

11. A network system comprising:
a relay device (14) configured to establish a connection to a network to relay data; and
the management server (15) according to any one of claims 1 to 10, the management server being configured to control the connection to the network.

12. The network system according to claim 11, further comprising:
a control device (16) configured to control the relay device,
wherein the management server (15) instructs, via the control device (16), the relay device to disconnect the connection to the network.

13. The network system according to claim 11 or 12, further comprising:
an information processing apparatus (12) having a printing function,
wherein the management server (15) transmits, to the information processing apparatus (12) having the printing function, information on the network including a permitted use period of the network.

14. A method for controlling connection to a network, comprising:
receiving (S5) a request relating to the network; and
controlling (S6, S7), based on the received request, a relay device configured to establish a connection to the network to relay data,
wherein the controlling includes instructing (S11), in response to an elapse of a permitted use period of the network, the relay device to disconnect the connection to the network.

15. Carrier means carrying computer readable code for controlling a computer system to carry out the method of claim 14.
